# EUROPÄISCHE PATENTSCHRIFT

(11) **EP 3 352 973 B1**
(45) Veröffentlichungstag und Bekanntmachung des Hinweises auf die Patenterteilung: **02.11.2022**
(21) Anmeldenummer: 16781299.9
(22) Anmeldetag: 22.09.2016
(51) Int. Cl.: B22F 12/00, B22F 12/82, B22F 12/88, B33Y 30/00, B22F 3/24, B29C 64/153, B29C 64/379, B33Y 10/00, B33Y 40/00, B22F 10/20, B22F 10/60, B22F 10/73

(54) **ANLAGE ZUR HERSTELLUNG VON DREIDIMENSIONALEN OBJEKTEN**
SYSTEM FOR PRODUCING THREE-DIMENSIONAL OBJECTS
SYSTÈME DE FABRICATION DES OBJETS TRIDIMENSIONELS

(30) Priorität: 25.09.2015 DE 102015116282
(43) Veröffentlichungstag der Anmeldung: 01.08.2018
(73) Patentinhaber: CL Schutzrechtsverwaltungs GmbH, 96215 Lichtenfels (DE)
(72) Erfinder: HERZOG, Frank, 96215 Lichtenfels (DE); BECHMANN, Florian, 96215 Lichtenfels (DE); ZEULNER, Fabian, 96215 Lichtenfels (DE); STAMMBERGER, Jens, 96472 Rödental (DE); DILLER, Christian, 96215 Lichtenfels (DE); HETZEL, Ralf, 96231 Bad Staffelstein (DE)
(74) Vertreter: Hafner & Kohl PartmbB
(86) Internationale Anmeldenummer: PCT/EP2016/072489
(87) Internationale Veröffentlichungsnummer: WO 2017/050860

(56) Entgegenhaltungen:
- EP-A2- 1 961 514
- DE-A1-102009 036 153
- DE-A1-102013 223 411
- US-A1- 2002 179 602
- US-A1- 2015 035 206

## Beschreibung

Die Erfindung betrifft eine Anlage zur Herstellung von dreidimensionalen Objekten durch aufeinanderfolgendes Verfestigen von Schichten eines mittels verfestigbaren Aufbaumaterials an den dem jeweiligen Querschnitt des Objektes entsprechenden Stellen. Derartige Anlagen werden auch als Anlagen zum generativen Aufbau von Gegenständen bezeichnet und umfassen sogenannte SLM (selective laser melting) oder SLS (selective laser sintering) Vorrichtungen. Die Erfindung ist aber darauf nicht beschränkt, sondern erstreckt sich auch auf weitere Vorrichtungen, bei denen das zu verfestigende Baumaterial beispielsweise auf die zu aufzubauende Stelle aufgedüst wird und dort z.B. durch einen Laserstrahl aufgeschmolzen und bei Erstarrung verfestigt wird, um generativ das Bauteil zu bilden.

Bekannte Vorrichtungen dieser Art umfassen in der Regel eine Prozessstation, in der der eigentliche schichtweise generative Bauprozess durchgeführt wird, wozu meist ein Baucontainer Anwendung findet. Es ist auch bereits bekannt, in einem zweiten Gehäuse oder Gehäuseabschnitt eine Handlingstation zur Entpackung hergestellter Objekte aus dem zwischen der wenigstens einen Prozessstation und der wenigstens einen Handlingstation verfahrbaren Baucontainer anzuordnen. Eine derartige Vorrichtung ergibt sich z.B. aus DE 20040547, dort sind in einer zusammenhängenden Gehäuseeinheit sowohl eine Prozessstation als auch eine Entnahmestation vorgesehen, wobei der Baucontainer zwischen den beiden genannten Stationen hin- und her gefahren werden kann.

Diese bekannte Vorrichtung ist insofern nachteilig, als sie als in sich abgeschlossene Einheit nicht erweiterbar ist.

Aus DE 20140087 ergibt sich zudem eine Vorrichtung der genannten Art mit einer Mehrzahl von Handhabungsstationen, die im wesentlichen nebeneinanderliegend angeordnet sind und einzeln oder gemeinsam als Handhabungsmodule gegenüber wenigstens einer Baukammer verschiebbar, verdrehbar oder verschwenkbar, aber an diese angekoppelt angeordnet sind.

Ferner offenbart EP1961514 A2 eine Anlage zur generativen Fertigung wobei ein Tunnel vorhanden ist.

Der Erfindung liegt die Aufgabe zugrunde, eine Anlage mit den Merkmalen des Oberbegriffes des Anspruches 1 derart weiterzubilden, dass sie variabler einsetzbar ist, an sich ändernde Anforderungen innerhalb eines Herstellungsbetriebs anpassbar ist und eine hocheffiziente schnelle Fertigung erlaubt.

Diese Aufgabe wird durch die kennzeichnenden Merkmale des Anspruches 1 gelöst, vorteilhafte Weiterbildungen ergeben sich aus den Unteransprüchen 2 - 14. Die Verfahrensansprüche 15-17 charakterisieren die Erfindung verfahrensmäßig.

Nach der Lehre des Patentanspruches 1 sind in einer ersten Alternative sowohl die Prozessstation als auch die wenigstens eine Handlingstation in gesonderten, getrennt oder einzeln aufstellbaren Gehäuseeinheiten angeordnet. Diese Gehäuseeinheiten sind in Wandungsbereichen mit Zuführöffnungen versehen und derart ausgebildet, dass sie in teilweise getrennter Konstellation wenigstens einen durchgängigen Tunnel oder eine Tunnelkette bilden können, wobei der Tunnel oder die Tunnelkette einen in die Gehäuseeinheiten integrierten Verfahrweg für Baucontainer und weitere verfahrbare Container bildet.

Als Kern der Erfindung wird es damit angesehen, innerhalb der Gehäuseeinheiten, die frei variabel aufstellbar sind, mit Abstand voneinander vorgesehen werden können, einen Tunnelverfahrweg auszubilden, der nicht nur für den Baucontainer, sondern auch für weitere Container nutzbar ist. Dies bedeutet, dass z.B. auf ein und demselben Verfahrweg Container von mehreren Prozessstationen in eine gemeinsame oder mehrere dafür vorgesehene Handlingstationen verfahren werden können. Es ist aber auch möglich, z.B. Überlaufcontainer mit überschüssigem Baumaterial auf diesem Verfahrweg abzutransportieren oder Dosierbehälter mit frischem Baumaterial in eine Prozessstation einzufahren. Alles geschieht innerhalb eines Tunnels.

Weiterhin liegt es im Rahmen der Erfindung, nur eine Aneinanderreihung von Prozessstationen vorzusehen und in diesen den Tunnel oder die Tunnelabschnitte anzuordnen und diese tunnelartig zu verbinden und die Vorbereitung der Baucontainer bzw. die Entnahme fertiggestellter Bauteile z. B. von einem Roboter in einem großen inertisierten Raum durchzuführen. Dieser inertisierte Raum dient dann quasi als Handlingstation und ist zweckdienlicher Weise mit dem Tunnel oder den Tunnelabschnitten zu verbinden.

Das Tunnelkonzept, wie es bei der Erfindung angewendet werden soll, hat mehrere Vorteile. Einerseits gibt es zwischen den verfahrbaren Containern und Bedienungspersonen, die sich in der Peripherie einer derartigen Anlage aufhalten müssen, keine Interaktionen und damit auch keine Gefährdungen. Die Tunnelintegration des Verfahrweges in die Vorrichtung selbst, ermöglicht ein sauberes und konfliktfreies Handling der Container innerhalb der gesamten Anlage.

Die Container können verschließbar sein, damit die Schutzgasatmosphäre in ihnen weitgehend aufrecht erhalten werden kann. Es ist aber auch möglich, die Tunnel oder die Tunnelabschnitte selbst mit Schutzgas zu befluten und an den Tunnelein- und -ausgängen Schleusen anzubringen.

Wenn von "weiteren Containern" gesprochen wird, dann sind damit alle Container-artigen und auszutauschenden oder zu wechselnden Behälter umfasst, die in derartigen Anlagen eingesetzt oder gedacht werden können. Insbesondere sind Dosiercontainer zur Zuführung des Baumaterials zu einer Beschichtereinrichtung angesprochen, Überlaufcontainer zur Aufnahme von überschüssigem Baumaterial. Es können aber auch Container oder "Module" verfahren werden, die keine "Füllung" im weiteren Sinne des Wortes aufweisen, sondern Funktionselemente beinhalten, wie beispielsweise Servicemodule, die z.B. einen Schutzglaswechsel automatisch vornehmen können oder Reinigungsmodule oder Fräskopfmodule oder Messkopfmodule, mit denen unterschiedliche Reinigungs-, Bearbeitungs- oder Vermessungsaufgaben innerhalb der unterschiedlichen Stationen durchgeführt werden können. Diese Module werden erfindungsgemäß im oberen Bereich z.B. hängend in dem Tunnel oder der Tunnelkette verfahren, wohingegen Baucontainer, Uberlaufcontainer und Dosiercontainer auf einem z.B. schienenartigen Verfahrweg im unteren Bereich des Tunnels abgestützt werden können. Grundsätzlich liegt es auch im Rahmen der Erfindung, die Container oder Module auf Transportwagen aufzunehmen, die mit einem Selbstfahrantrieb und einer Steuerung, z.B. einer Hallen-GPS-Steuerung versehen sind. Die Container oder Module können aber auch mit einem Selbstfahrantrieb ausgebildet sein, d.h. prozessgesteuert selbst ihren Weg an ihren richtigen Platz finden, es ist aber auch möglich, ein irgendwie geartetes fest in den Tunnel integriertes Vorschubtransportsystem vorzusehen.

Ganz besonders vorteilhaft ist es, wenn der Verfahrweg innerhalb des Tunnels immer weitgehend freigehalten wird. Dann ist nämlich ein freier Container-Modul-Verkehr hoher Geschwindigkeit abwickelbar, dazu kann beispielsweise der Tunnel oder die Tunnelkette mit Seitennischen oder Ausweichstationen versehen werden, in welche die verfahrbaren Container oder Module insbesondere in einer Arbeitsposition oder im Zuge eines Ausweichvorganges zur durchgängigen Freigabe des in der Tunnelöffnung verlaufenden Verfahrweges für weitere Container einfahrbar sind. Z.B. ist in einer Prozessstation eine Seitennische vorgesehen, die einen Baucontainer sowie den Dosier- und den Überlaufcontainer in den jeweiligen Arbeitspositionen aufnimmt. Vor oder hinter diesen Nischen ist der eigentliche Tunnelverfahrweg angeordnet, weitere Container können zu weiteren angereihten Prozessstationen oder Handlingstationen durch den freigelassenen Verfahrweg mit relativ hoher Geschwindigkeit geschickt werden.

Der Tunnel oder die Tunnelkette kann an einem Ende verschlossen sein, dies verbessert die Schutzgasbeflutungsmöglichkeiten. Es ist aber auch z.B. möglich, an einem Ende des Tunnels innerhalb einer Schutzgasatmosphäre ein Containermagazin anzuordnen, in welchem Schutzgas vorbeflutete Baucontainer mit bereits eingerichteten Bauplatten Dosiercontainer oder leere Überlaufcontainer bevorratet werden und von dort in den Tunnel bzw. die entsprechenden Arbeitspositionen eingefahren werden. Von der anderen Seite können Dosierbehälter eingefahren werden oder Überlaufbehälter ausgefahren werden und dort entleert werden. Der Tunnel muss nicht notwendigerweise nur einen Ausgang oder Eingang haben, es ist genauso möglich, Seitenaus- und -eingänge an dem Tunnel vorzusehen, um mit kurzen Wegen Container an ihren jeweiligen Arbeitsplatz zu verbringen oder Servicemodule von dort zu starten, um einen Servicevorgang möglichst abzukürzen. Grundsätzlich besteht die Möglichkeit, Gehäuseelemente getrennt aufzustellen, so dass sich in den Gehäuseelementen eine Tunnelkette bildet oder die Gehäuseelemente zu verbinden, so dass ein durchgängiger Tunnel innerhalb der Gehäuseelemente gebildet wird.

Erfindungsgemäß sind aber zwischen den einzeln aufgestellten Gehäuseelementen von Prozessstationen oder Handlingstationen oder weiteren Stationen Tunnelverbindungselemente anzubringen, die gerade oder gebogen sein können. Es ist auch möglich, die Tunnelverbindungselemente an die Gehäuseein- und -ausgänge gasdicht anflanschbar zu gestalten und die Tunnelverbindungselemente flexibel oder mit einer Gelenkverbindung zu versehen, so dass die Anlagengehäuseelemente frei wählbar an den Verlauf einer Fabrikationshalle anpassbar sind. Damit können die Tunnelverbindungselemente zur Ausbildung eines nicht geraden Verfahrweges gekrümmt ausgebildet sein oder gekrümmt werden. In den einzelnen Gehäuseabschnitten und/oder Tunnelverbindungselementen sind aneinander ankoppelbare oder ineinander übergehende Containerführungselemente angeordnet, dies können - wie oben bereits angemerkt - Schienen oder Leitelemente oder dergleichen sein, hier sind alle Elemente umfasst, die eine ausreichend exakte Führung von Containern oder Modulen gewährleisten können.

Grundsätzlich ist es auch denkbar, im Sinne eines "Zweiröhrentunnels" mehrere parallel angeordnete Tunnel vorzusehen oder innerhalb einer Tunnelröhre parallel zueinander verlaufende "Gegenfahrbahnen" vorzusehen. Dies erleichtert Organisation des Transportes und erhöht die Transportgeschwindigkeit und verkürzt damit die Transportzeiten innerhalb des Tunnels.

Es ist auch möglich, einen sich verzweigenden Tunnel vorzusehen, der zu einer Mehrzahl von Prozessstationen führt oder zu einer Mehrzahl von Entpackungs- oder Handlingstationen.

Gleichermaßen ist es denkbar, wenigstens eine Prozessstation und/oder Handlingstation und/oder ein Tunnelverbindungselement als Umkehrstation auszubilden, so dass quasi für den Container- oder Modultransport eine Umkehrschleife gebildet wird.

Im Sinne des Verfahrensanspruches 15 ist es vorgesehen, dafür zu sorgen, dass ein die Mehrzahl von Gehäuseeinheiten von Prozess- und Handlingstationen durchsetzender Verfahrweg durch fahrbare oder geparkte Container nicht blockiert wird, sondern der Verfahrweg weitestgehend freigehalten wird. Der Verfahrweg kann ein Einbahnverfahrweg sein oder auch als Zweiwegverfahrweg ausgebildet sein.

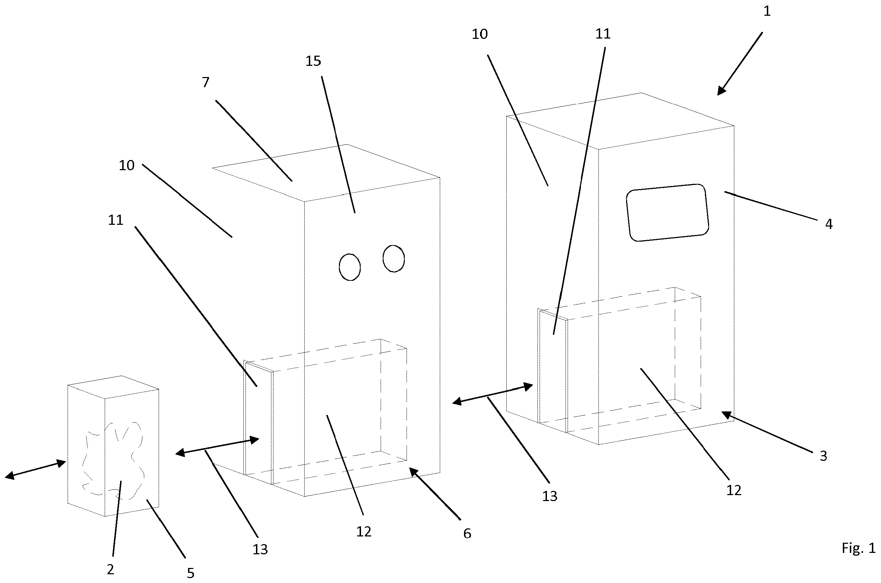

Die Erfindung ist anhand vorteilhafter Ausführungsbeispiele in den Zeichnungsfiguren näher erläutert. Diese zeigen
- Fig. 1: eine Anlage gem. der Erfindung mit jeweils getrennt aufgestellter Prozessstation und Handlingstation und einem durch einen Tunnel durch die beiden Anlagenkomponenten verlaufenden Verfahrweg für Container;

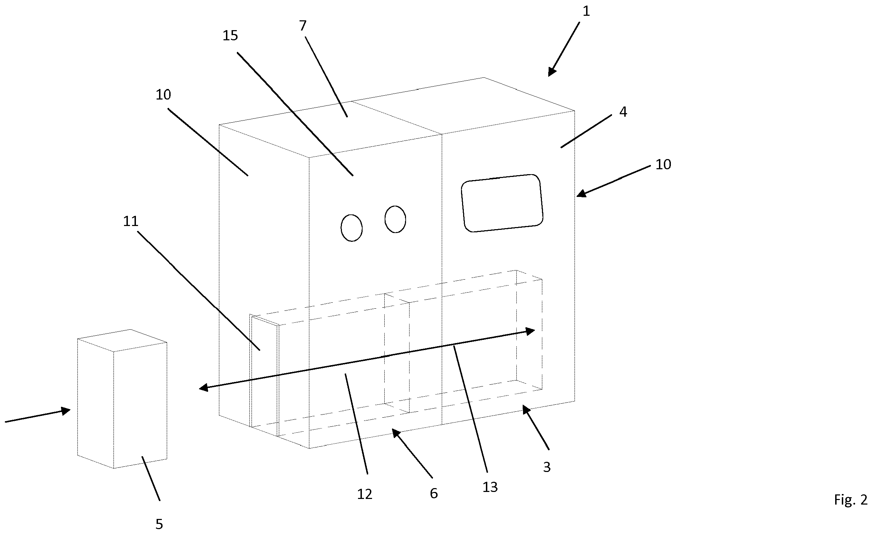

- Fig. 2: eine Anlage nicht gem. der Erfindung mit unmittelbar aneinandergestellter Handlingstation und Prozessstation und einem durch diese verlaufenden Tunnel zum Transport von Containern;
- Fig. 3: eine Anlage mit einer Handlingstation und beispielsweise drei Prozessstationen zur Bildung einer Produktionslinie mit nicht ertfndungsgemäßer I unnelanordnung;

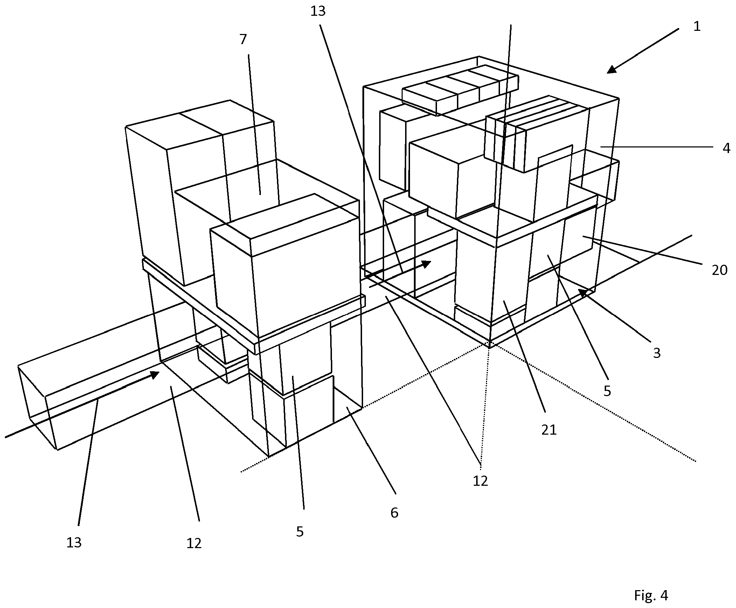

- Fig. 4: eine schematische Darstellung einer Handlingstation und einer Prozessstation mit durch beide verlaufende Tunnel zum Transport unterschiedlicher Container;
- Fig. 5: eine schematische Darstellung einer Anlage mit Handlingstation und zwei Prozessstationen sowie einem Containermagazin;
- Fig. 6: eine Darstellung gemäß Fig. 5, in der die Bewegung der unterschiedlichen Container dargestellt ist;

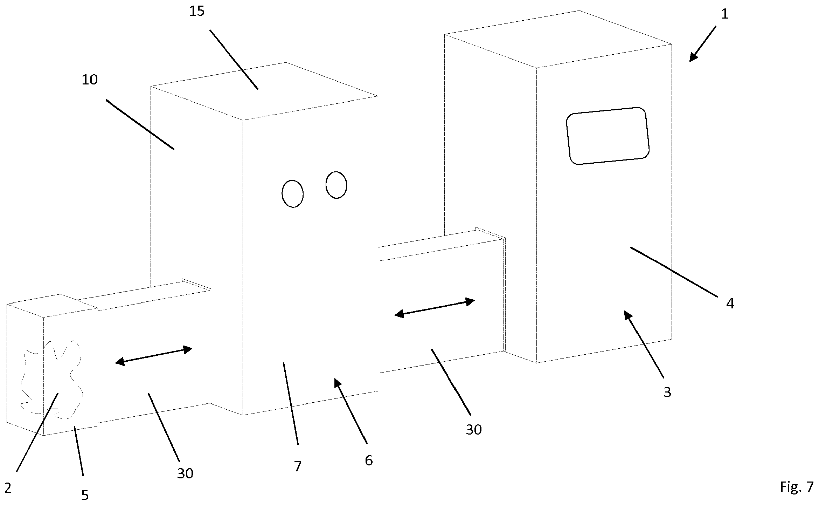

- Fig. 7: eine Darstellung gemäß Fig. 1, bei der die Handlingstation und die Prozessstation durch ein Tunnelverlängerungselement verbunden sind;

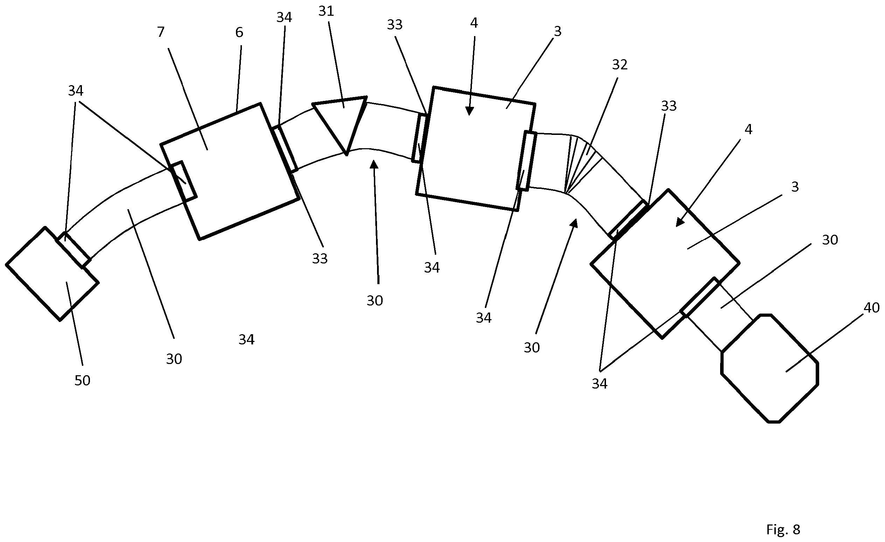

- Fig. 8: eine schematische Draufsicht auf eine Anlage mit Containermagazin, einer Handlingstation, zwei Prozessstationen und einer Umkehrstation, wobei alle Stationen mit Tunnelverlängerungselementen unterschiedlicher Form verbunden sind;

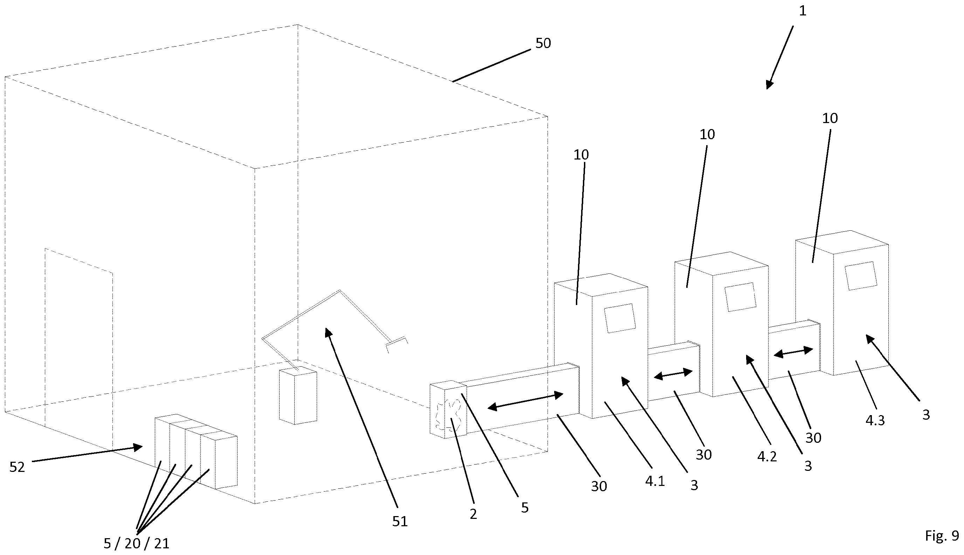

- Fig. 9: eine schematische Darstellung einer Anlage, bei der drei Prozessstationen nach dem Tunnelprinzip mit einem Handlingraum verbunden sind.

Die in den Zeichnungsfiguren dargestellte Anlage 1 dient zur Herstellung von dreidimensionalen Objekten 2 durch aufeinanderfolgendes Verfestigen von Schichten eines mittels Strahlung, insbesondere Laserstrahlung verfestigbaren Aufbaumaterials an den dem jeweiligen Querschnitt des Objektes 2 entsprechenden Stellen. Eine solche Anlage 1 umfasst wenigstens eine in einem ersten Gehäuse 3 angeordnete Prozessstation 4 zur Durchführung des schichtweisen generativen Bauprozesses in einem Baucontainer 5 und in wenigstens einem zweiten Gehäuse 6 eine Handlingstation 7 zur Entpackung der hergestellten Objekte 2 aus dem Baucontainer 5, der zwischen der Prozessstation 4 und der Handlingstation 7 verfahrbar ist.

Die wenigstens eine Prozessstation 4 und die wenigstens eine Handlingstation 7 sind in gesonderten getrennt oder einzeln aufstellbaren Gehäuseeinheiten (3, 6) angeordnet, die beim Ausführungsbeispiel in ihren Seitenwandungsbereichen 10 mit Zuführöffnungen 11 versehen und ausgebildet, so dass sie ineinandergestellter oder teilweise getrennter Konstellation wenigstens einen durchgängigen Tunnel 12 oder eine Tunnelkette bilden können, wobei der Tunnel 12 oder die Tunnelkette einen in die Gehäuseeinheiten 3, 6 integrierten Verfahrweg 13 für Baucontainer 5 und weitere verfahrbare Container bildet.

Für den Fachmann ist es geläufig, dass in das Gehäuse 3 der Prozessstation 4 eine Vielzahl von für die Durchführung des Verfahrens erforderlichen Vorrichtungen und Geräte integriert sein müssen, z.B. Strahlungsquellen in Form von wenigstens einem Laser, wenigstens ein Scansystem, eine Prozesskammer, eine Dosierkammer, eine Überlaufkammer und dergleichen. Die Handlingstation 7 umfasst eine Glovebox 15 mit manuellen Eingriffen, damit innerhalb dieser Glovebox 15 der Entpackungsvorgang durchgeführt werden kann. Darüber hinaus kann die Handlingstation 7 ein Siebmodul umfassen, durch welches bereits benutztes Baumaterial von Verklumpungen und Schmelzrückständen befreit werden kann.

In Zeichnungsfigur 2 ist ersichtlich, dass die beiden Gehäuse 3, 6 auch unmittelbar aneinandergestellt werden können (nicht Teil der Erfindung). Die in den Seitenwandbereichen 10 angeordneten Zuführöffnungen 11 sind derart deckungsgleich angeordnet, so dass der erfindungsgemäße durchgängige Tunnel 12 und Verfahrweg 13 gebildet werden kann.

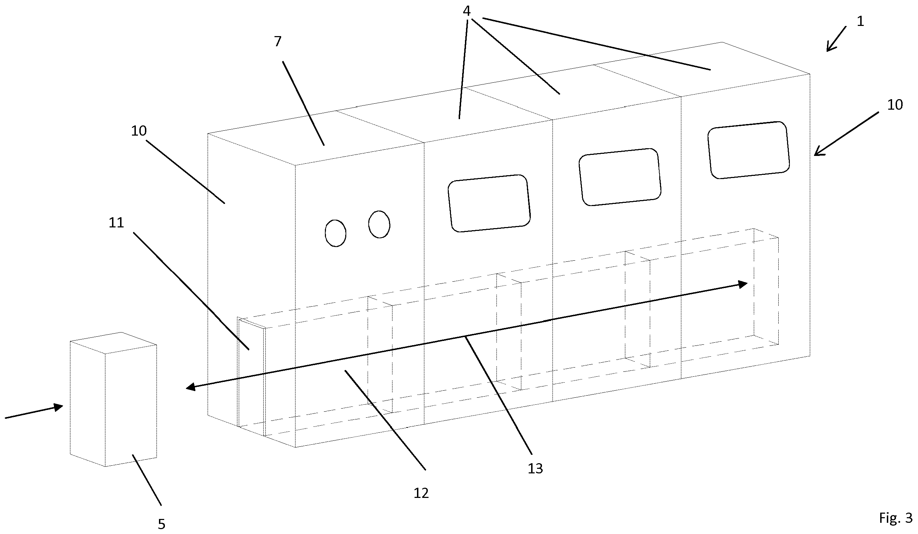

Wie aus Figur 3 ersichtlich, kann eine Handlingstation 7 mit einem Gehäuse 6 auch mit einer Mehrzahl von Prozessstationen 4 kombiniert werden, so dass eine Produktionslinie gebildet wird.

In Zeichnungsfigur 4 ist nun dargestellt, wie einzelne Elemente innerhalb der Gehäuse 3, 6 angeordnet werden können und wie der durch diese verlaufende Tunnel 12 mit dem Verfahrweg 13 verlagert. Bedeutungsvoll ist, dass der Tunnel 12 oder die Tunnelkette im Innenbereich der Gehäuseeinheiten 3, 6 mit Seitennischen oder Erweiterungen 16 versehen ist, in welche die verfahrbaren Container 5 insbesondere in einer Arbeitsposition oder im Zuge eines Ausweichvorganges zur durchgängigen Freigabe des in dem Tunnel 12 verlaufenden Verfahrweges 13 für weitere verfahrbare Container 5 einfahrbar sind. Weitere verfahrbare Container 5 können ein Überlaufcontainer 20, ein Dosiercontainer 21 oder weitere Module sein, die in der Zeichnungsfigur nicht näher dargestellt sind, aber als Servicemodul, als Reinigungsmodul und dergleichen ausgebildet sein können.

Bei dem in den Zeichnungsfiguren 1 - 4 dargestellten Ausführungsbeispiel verläuft der Tunnel 12 und damit auch der Verfahrweg 13 gerade durch die Gehäuseeinheiten 3, 6, es ist aber genauso möglich, einen gekrümmten Tunnelverlauf vorzusehen, wie er beispielsweise durch eine Anschrägung der Seitenwandungsbereiche 10 der Gehäuseeinheiten 3, 6 erzeugt werden kann oder durch Tunnelverbindungselemente 30, die in den Zeichnungsfiguren 7 und 8 schematisch dargestellt sind. Die Tunnelverbindungselemente 30 können entweder als gerade Verbindungskästen ausgebildet sein, durch die der Tunnel 12 verläuft, sie können aber auch mit keilförmigen Einsätzen 31 zur Bildung eines gekrümmten Verlaufes der Tunnelverbindungselemente 30 versehen sein. Genauso ist es möglich, flexible Abschnitte 32 in den Tunnelverbindungselementen 30 vorzusehen. Die Endbereiche 33 der Tunnelverbindungselemente 30 können mit gasdichten flanschartigen Verbindungseinheiten 34 versehen werden, die sich an die Zuführöffnungen 11 in den Seitenwandungsbereichen 10 anflanschen lassen.

In Zeichnungsfigur 8 ist noch eine Umkehrstation 40 angedeutet, diese kann ähnlich wie ein Tunnelabschnitt ausgebildet sein und an einem Ende des sich ergebenden Tunnels 12 angebracht werden. Als Umkehrstation wäre eine Vorrichtung denkbar, die wie eine Kehrschleife für die zu transportierenden Container 5 oder Module ausgebildet ist.

Grundsätzlich ist es möglich, den Tunnel 12 auch zweiröhrig auszubilden oder zumindest mit zwei gegenläufigen Verfahrwegen auszustatten, so dass in einer Tunnelröhre ein Gegenverkehr möglich ist.

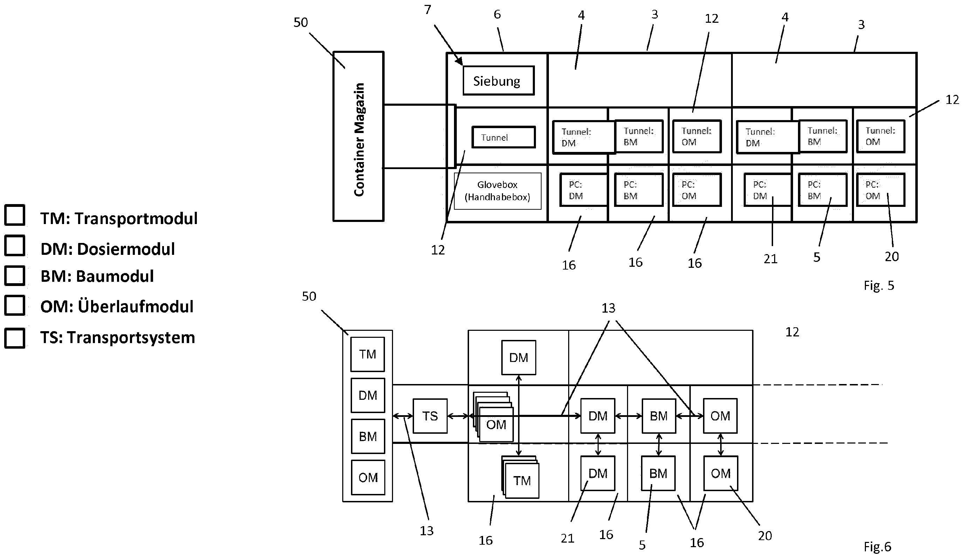

In Figuren 5 und 6 ist noch ein Containermagazin 50 dargestellt, das an die Tunnelanordnung gegebenenfalls gasdicht angeschlossen ist und in dem unterschiedliche Container und/oder Module zur Absendung in den Tunnel 12bereitgehalten werden können.

In Zeichnungsfigur 9 ist nun noch eine Anlage 1 dargestellt, bei welcher eine Mehrzahl von Prozessstationen 4.1, 4.2 und 4.3 nach dem Tunnelkonzept der Erfindung aneinandergereiht sind, wobei die Prozessstationen 4.1, 4.2 und 4.3 in jeweils gesonderten ersten Gehäusen 3 angeordnet sind und durch Tunnelverbindungselemente 30 miteinander verbunden sind.

Auf der linken Seite der Zeichnung ist noch ein größerer gesonderter Raum 50 dargestellt, der als Reinraum ausgebildet sein kann, ggf. ganz oder teilweise inertisierbar sein kann und unter Umständen sogar von einer Bedienungsperson betreten werden kann. Innerhalb dieses Raumes kann ein Roboter 51 vorbereitende oder entpackende Arbeitsschritte an dem Baucontainer 5 vornehmen, der über ein Tunnelverbindungselement in den inertisierten Raum 50 eingefahren werden kann.

Es liegt auch im Rahmen der Erfindung, einen derartigen inertisierbaren Raum 50 nur zur Vorbereitung der Baucontainer 5 vorzusehen und innerhalb der Gehäusekette eine Handlingstation 7 in einem weiteren Gehäuse anzuordnen, wo dann lediglich die Bauteile entpackt werden. Außerdem ist es möglich, in dem inertisierten Raum 50 ein Containermagazin 52 vorzusehen, in dem z.B. eine Mehrzahl von vorbereiteten Baucontainern 5 für den Bauprozess in den Prozessstationen 4 vorgesehen werden kann. Selbstverständlich können dort auch weitere für den Bauprozess vorbereitete Container, wie Überlaufcontainer 20 oder Dosiercontainer 21 oder Servicemodule zu ihrem Einsatz in der Anlage bereitgehalten werden.

### BEZUGSZEICHENLISTE

- 1: Anlage
- 2: Objekt
- 3: erstes Gehäuse
- 4: Prozessstation
- 5: Baucontainer
- 6: weiteres Gehäuse
- 7: Handlingstation

- 10: Seitenwandungsbereich
- 11: Zuführöffnung
- 12: Tunnel
- 13: Verfahrweg

- 15: Glovebox
- 16: Erweiterung

- 20: Überlaufcontainer
- 21: Dosiercontainer

- 30: Tunnelverbindungselement
- 31: Einsatz
- 32: flexibler Abschnitt
- 33: Endbereich v. 30
- 34: Verbindungseinheit

- 40: Umkehrstation

- 50: Raum
- 51: Roboter
- 52: Containern

## Patentansprüche

1. Anlage (1) zur Herstellung von dreidimensionalen Objekten (2) durch aufeinanderfolgendes Verfestigen von Schichten eines mittels Strahlung verfestigbaren Aufbaumaterials an den dem jeweiligen Querschnitt des Objektes (2) entsprechenden Stellen, wobei die Anlage (1) wenigstens eine in einem Gehäuse (3) angeordnete Prozessstation (4) zur Durchführung des schichtweisen generativen Bauprozesses sowie einen verfahrbaren Baucontainer (5) umfasst, wobei die Prozessstation (4) und wenigstens eine Handlingstation (7) oder eine oder mehrere weitere Prozessstationen in gesonderten, getrennt oder einzeln aufstellbaren Gehäuseeinheiten (3, 6) angeordnet sind und diese Gehäuseeinheiten (3, 6) insbesondere in ihren Seitenwandungsbereichen (10) mit Zuführöffnungen (11) versehen und ausgebildet sind, in teilweise getrennter Konstellation wenigstens einen durchgängigen Tunnel (12) oder eine Tunnelkette zu bilden, der bzw. die einen in die Gehäuseeinheiten (3, 6) integrierten Verfahrweg (13) für Baucontainer (5) und weitere in der Anlage (1) verfahrbare Container oder verfahrbare Module bildet, wobei zwischen den Gehäuseinheiten (3, 6) Tunnelverbindungselemente (30) angeordnet sind, **dadurch gekennzeichnet, dass**
Container oder Module, die Funktionselemente beinhalten, in einem oberen Bereich in dem Tunnel oder der Tunnelkette verfahrbar sind und Baucontainer, Überlaufcontainer und Dosiercontainer in einem unteren Bereich des Tunnels oder der Tunnelkette abgestützt werden können.

2. Anlage nach Anspruch 1, **dadurch gekennzeichnet, dass** die weiteren verfahrbaren Container (5) wenigstens einen Dosiercontainer (21) zur Zuführung des Baumaterials zu einer Beschichtereinrichtung und/oder einen Überlaufcontainer (20) zur Aufnahme von überschüssigem Baumaterial aus der Beschichtungsvorrichtung und/oder ein Transportmodul zur Aufnahme eines fertig gestellten entpackten Objektes (2) umfassen.

3. Anlage nach einem der Ansprüche 1 oder 2, **dadurch gekennzeichnet, dass** der Tunnel (12) oder die Tunnelkette im Innenbereich der Gehäuseeinheiten (3, 6) mit Seitennischen oder Erweiterungen (16) versehen ist, in welche die verfahrbaren Container (5) insbesondere in einer Arbeitsposition oder im Zuge eines Ausweichvorgangs zur durchgängigen Freigabe des in dem Tunnel (12) verlaufenden Verfahrwegs (13) für weitere verfahrbare Container (5) einfahrbar sind.

4. Anlage nach einem der vorhergehenden Ansprüche, **dadurch gekennzeichnet, dass** der Tunnel (12) oder die Tunnelkette an einem Ende verschlossen ist.

5. Anlage nach einem der vorhergehenden Ansprüche, **dadurch gekennzeichnet, dass** der Tunnel (12) oder die Tunnelkette mit Schutzgas flutbar ist.

6. Anlage nach einem der vorhergehenden Ansprüche, **dadurch gekennzeichnet, dass** zwischen den einzelnen Gehäuseeinheiten (3, 6) Schutzgasschleusen angeordnet sind.

7. Anlage nach einem der vorhergehenden Ansprüche, **dadurch gekennzeichnet, dass** der durch die Gehäuseeinheiten (3, 6) verlaufende Tunnel (12) gerade ist.

8. Anlage nach einem der vorhergehenden Ansprüche, **dadurch gekennzeichnet, dass** die Tunnelverbindungselemente (30) zur Ausbildung eines nicht geraden Verfahrwegs (13) gekrümmt sind.

9. Anlage nach einem der vorhergehenden Ansprüche, **dadurch gekennzeichnet, dass** in den einzelnen Gehäuseeinheiten (3, 6) und/oder Tunnelverbindungselementen (30) aneinander ankoppelbare oder ineinander übergehende Containerführungselemente angeordnet sind.

10. Anlage nach einem der vorhergehenden Ansprüche, **dadurch gekennzeichnet, dass** in dem Tunnel (12) wenigstens ein Servicemodul und/oder ein Schutzglaswechselmodul und/oder ein Reinigungsmodul und/oder ein Fräskopfmodul und/oder ein Messkopfmodul verfahrbar ist.

11. Anlage nach einem der vorhergehenden Ansprüche, **dadurch gekennzeichnet, dass** eine Mehrzahl von zumindest abschnittsweise parallel angeordneten Tunneln (12) innerhalb der Gehäuseeinheiten (3, 6) und/oder innerhalb der Tunnelverbindungselemente (30) angeordnet ist.

12. Anlage nach einem der vorhergehenden Ansprüche, **dadurch gekennzeichnet, dass** innerhalb der Tunnelverbindungselemente (30) wenigstens eine Tunnel-Ausweichnische angeordnet ist.

13. Anlage nach einem der vorhergehenden Ansprüche, **dadurch gekennzeichnet, dass** sich wenigstens ein Tunnel (12) in eine Mehrzahl von Tunnelabschnitten aufzweigt und wenigstens von einer Prozessstation (4) zu einer Mehrzahl von Handlingsstationen (7) führt.

14. Anlage nach einem der vorhergehenden Ansprüche, **dadurch gekennzeichnet, dass** wenigstens eine Prozessstation (4) oder eine Handlingstation (7) oder ein Tunnelverbindungselement (30) als Umkehrstation ausgebildet ist.

15. Verfahren zur Herstellung von dreidimensionalen Objekten (2) durch aufeinanderfolgendes Verfestigen von Schichten eines mittels Strahlungen verfestigbaren Aufbaumaterials an den dem jeweiligen Querschnitt des Objektes (2) entsprechenden Stellen, mit folgenden Merkmalen:
- Vorsehen einer Anlage (1) mit einer Mehrzahl von einzelnen Gehäuseeinheiten (3, 6), die mit Abstand zueinander aufstellbar sind und wenigstens eine Prozessstation (4) zur Durchführung des generativen Bauprozesses und wenigstens eine Handlingstation (7) zur Entpackung von hergestellten Objekten (2) aus einem zwischen der Prozessstation (4) und Handlingstation (7) verfahrbaren Baucontainer (5) umfassen, wobei zwischen den Gehäuseeinheiten (3, 6) Tunnelverbindungselemente (30) angeordnet sind,
- Vorsehen eines die Mehrzahl von Gehäuseeinheiten (3, 6) durchsetzenden Tunnels (12) als Verfahrweg (13) für die Baucontainer (5) und weitere Container- oder Module und Ausbildung des Tunnels (12) derart, dass in Arbeitsposition oder im Zuge eines Ausweichvorganges in den Gehäuseeinheiten (3, 6) angeordnete Baucontainer (5) oder sonstige verfahrbare Container den Verfahrweg (13) durch den Tunnel (12) nicht blockieren, **dadurch gekennzeichnet, dass**
Container oder Module, die Funktionselemente beinhalten, in einem oberen Bereich in dem Tunnel oder der Tunnelkette verfahrbar sind und Baucontainer, Überlaufcontainer und Dosiercontainer in einem unteren Bereich des Tunnels oder der Tunnelkette abgestützt werden können.

16. Verfahren nach Anspruch 15, **dadurch gekennzeichnet, dass** der Verfahrweg (13) als Einbahn-Verfahrweg ausgebildet ist.

17. Verfahren nach Anspruch 15,
**dadurch gekennzeichnet, dass** der Verfahrweg (13) als Zweiweg-Verfahrweg ausgebildet ist.

## Claims

1. A system (1) for producing three-dimensional objects (2) by means of successive setting of layers of a construction material, which can be set by means of radiation, at the locations which correspond to the respective cross-section of the object (2), wherein the system (1) comprises at least one process station (4) which is arranged in a housing (3) in order to carry out the layered generative construction process and a displaceable construction container (5), **characterized in that** the process station (4) and at least one handling station (7) or one or more additional process stations are arranged in separate housing units (3, 6) which can be erected separately or individually, and those housing units (3, 6) are provided with supply openings (11) in particular in the side wall regions (10) thereof and are constructed to form in a configuration which is partially separate at least one continuous tunnel (12) or a tunnel chain which forms a travel path (13) which is integrated in the housing units (3, 6) for construction containers (5) and additional containers which can be displaced in the system or displaceable modules; wherein containers or modules which contain functional elements are displaced in the upper region in the tunnel or the tunnel chain, whereas construction containers, overflow containers and metering containers are supported on a rail-like travel path in the lower region of the tunnel.

2. The system as claimed in claim 1, **characterized in that** the additional displaceable containers (5) comprise at least one metering container (21) for supplying the construction material to a coating device and/or an overflow container (20) for receiving excessive construction material from the coating device and/or a transport module for receiving a finished unpacked object (2).

3. The system as claimed in claim 1 or 2, **characterized in that** the tunnel (12) or the tunnel chain is provided in the inner region of the housing units (3, 6) with lateral niches or expansions (16) in which the displaceable containers (5) can be introduced in particular in an operating position or during a bypass operation for the continuous release of the travel path (13) which extends in the tunnel (12) for additional displaceable containers (5).

4. The system as claimed in any of the preceding claims, **characterized in that** the tunnel (12) or the tunnel chain is closed at one end.

5. The system as claimed in any of the preceding claims, **characterized in that** the tunnel (12) or the tunnel chain can be flooded with protective gas.

6. The system as claimed in any of the preceding claims, **characterized in that** protective gas locks are arranged between the individual housing elements (3, 6) or tunnel chain elements.

7. The system as claimed in any of the preceding claims, **characterized in that** the tunnel (12) which extends through the housing elements (3, 6) is linear.

8. The system as claimed in any of the preceding claims, **characterized in that** the tunnel connection elements (30) are curved in order to form a non-linear travel path (13).

9. The system as claimed in any of the preceding claims, **characterized in that** container guiding elements which can be connected to each other or which merge into each other are arranged in the individual housing portions (3, 6) and/or tunnel connection elements (30).

10. The system as claimed in any of the preceding claims, **characterized in that** at least one service module and/or one protective glass changing module and/or one cleaning module and/or one milling head module and/or one measurement head module can be displaced in the tunnel (12).

11. The system as claimed in any of the preceding claims, **characterized in that** a plurality of tunnels (12) which are at least partially arranged in a parallel manner are arranged inside the housing units (3, 6) and/or inside the tunnel connection elements (30).

12. The system as claimed in any of the preceding claims, **characterized in that** at least one tunnel bypass niche is arranged inside the connection elements (30).

13. The system as claimed in any of the preceding claims, **characterized in that** at least one tunnel (12) branches off into a plurality of tunnel portions and at least leads from a process station (4) to a plurality of handling stations (7).

14. The system as claimed in any of the preceding claims **characterized in that** at least one process station (4) or one handling station (7) or one tunnel connection element (30) is/are constructed as a reversal station.

15. A method for producing three-dimensional objects (2) by means of successive setting of layers of a construction material, which can be set by means of radiation, at the locations which correspond to the respective cross-section of the object, having the following features:
providing a system (1) having a plurality of individual housing units (3, 6) which can be erected with spacing from each other and which comprise at least one process station (4) for carrying out the generative construction process and at least one handling station (7) for unpacking produced objects (2) from a construction container (5) which can be displaced between the process station (4) and the handling station (7),
providing a tunnel (12) through which the plurality of housing units (3, 6) extend as a travel path (13) for the construction containers (5) and additional containers or modules and constructing the tunnel (12) in such a manner that construction containers (5) which are arranged in the operating position or during a bypass operation in the housing units (3, 6) or other displaceable containers do not block the travel path (13) through the tunnel (12); wherein containers or modules which contain functional elements are displaced in the upper region in the tunnel or the tunnel chain, whereas construction containers, overflow containers and metering containers are supported on a rail-like travel path in the lower region of the tunnel.

16. The method as claimed in claim 15, **characterized in that** the travel path (13) is constructed as a one-way travel path.

17. The method as claimed in claim 15, **characterized in that** the travel path (13) is constructed as a two-way travel path.

## Revendications

1. Installation (1) de fabrication d'objets tridimensionnels (2) par solidification successive de couches d'un matériau de construction pouvant être solidifié au moyen d'un rayonnement sur les emplacements correspondant à la section transversale respective de l'objet (2), dans laquelle l'installation (1) comprend au moins un poste de traitement (4) disposé dans un boîtier (3) pour mettre en oeuvre le processus de construction génératif par couches ainsi qu'un conteneur de construction (5) pouvant être déplacé, dans laquelle le poste de traitement (4) et au moins un poste de manipulation (7) ou un ou plusieurs autres postes de traitement sont disposés dans des unités formant boîtier (3, 6) isolées pouvant être placées séparément ou individuellement et ces unités formant boîtier (3, 6) sont pourvues en particulier dans leurs zones de paroi latérale (10) d'ouverture d'amenée (11) et sont réalisées pour former selon une constellation en partie séparée au moins un tunnel (12) continu ou une chaîne de tunnels, qui forme une voie de déplacement (13) intégrée dans les unités formant boîtier (3, 6) pour des conteneurs de construction (5) et d'autres conteneurs pouvant être déplacés dans l'installation (1) ou d'autres modules pouvant être déplacés, dans laquelle des éléments de liaison de tunnels (30) sont disposés entre les unités formant boîtier (3, 6), **caractérisée en ce que**
des conteneurs ou des modules, qui renferment des éléments fonctionnels, peuvent être déplacés dans une zone supérieure dans le tunnel ou dans la chaîne de tunnels et des conteneurs de construction, des conteneurs de trop-plein et des conteneurs de dosage peuvent être soutenus dans une zone inférieure du tunnel ou de la chaîne de tunnels.

2. Installation selon la revendication 1, **caractérisée en ce que** les autres conteneurs (5) pouvant être déplacés comprennent au moins un conteneur de dosage (21) pour amener le matériau de construction vers un dispositif de revêtement et/ou un conteneur de trop-plein (20) pour recevoir du matériau de construction en excédent provenant du dispositif de revêtement et/ou un module de transport pour recevoir un objet (2) déballé fin prêt.

3. Installation selon l'une quelconque des revendications 1 ou 2, **caractérisée en ce que** le tunnel (12) ou la chaîne de tunnels est pourvu ou pourvue dans la zone intérieure des unités formant boîtier (3, 6) de niches latérales ou d'élargissements (16), dans lesquels les conteneurs (5) pouvant être déplacés peuvent être rentrés en particulier dans une position de travail ou dans le cadre d'une opération d'évitement pour débloquer en continu la voie de déplacement (13) s'étendant dans le tunnel (12) pour d'autres conteneurs (5) pouvant être déplacés.

4. Installation selon l'une quelconque des revendications précédentes, **caractérisée en ce que** le tunnel (12) ou la chaîne de tunnels est fermé ou fermée sur une extrémité.

5. Installation selon l'une quelconque des revendications précédentes, **caractérisée en ce que** le tunnel (12) ou la chaîne de tunnels peut être inondé ou inondée de gaz de protection.

6. Installation selon l'une quelconque des revendications précédentes, **caractérisée en ce que** des écluses à gaz de protection sont disposées entre les diverses unités formant boîtier (3, 6).

7. Installation selon l'une quelconque des revendications précédentes, **caractérisée en ce que** le tunnel (12) s'étendant à travers les unités formant boîtier (3, 6) est droit.

8. Installation selon l'une quelconque des revendications précédentes, **caractérisée en ce que** les éléments de liaison de tunnels (30) sont incurvés pour réaliser une voie de déplacement (13) non droite.

9. Installation selon l'une quelconque des revendications précédentes, **caractérisée en ce que** des éléments de guidage de conteneurs pouvant être accouplés les uns aux autres ou s'imbriquant les uns dans les autres sont disposés dans les diverses unités formant boîtier (3, 6) et/ou dans les divers éléments de liaison de tunnels (30).

10. Installation selon l'une quelconque des revendications précédentes, **caractérisée en ce qu'**au moins un module d'entretien et/ou un module de remplacement de vitre de protection et/ou un module de nettoyage et/ou un module à tête de fraisage et/ou un module à tête de mesure peuvent être déplacés dans le tunnel (12).

11. Installation selon l'une quelconque des revendications précédentes, **caractérisée en ce qu'**une multitude de tunnels (12) disposés au moins par endroits de manière parallèle est disposée à l'intérieur des unités formant boîtier (3, 6) et/ou à l'intérieur des éléments de liaison de tunnel (30).

12. Installation selon l'une quelconque des revendications précédentes, **caractérisée en ce qu'**au moins une niche d'évitement de tunnel est disposée à l'intérieur des éléments de liaison de tunnels (30).

13. Installation selon l'une quelconque des revendications précédentes, **caractérisée en ce qu'**au moins un tunnel (12) se divise en une multitude de tronçons de tunnel et mène au moins depuis un poste de traitement (4) vers une multitude de postes de manipulation (7).

14. Installation selon l'une quelconque des revendications précédentes, **caractérisée en ce qu'**au moins un poste de traitement (4) ou un poste de manipulation (7) ou un élément de liaison de tunnels (30) sont réalisés en tant que poste de renvoi.

15. Procédé de fabrication d'objets tridimensionnels (2) par solidification successive de couches d'un matériau de construction pouvant être solidifié au moyen de rayonnements sur les emplacements correspondant à la section transversale respective de l'objet (2), avec des caractéristiques suivantes :
- la prévision d'une installation (1) avec une multitude de diverses unités formant boîtier (3, 6), qui peuvent être placées à distance les unes par rapport aux autres et comprennent au moins un poste de traitement (4) pour mettre en oeuvre le processus de construction génératif et au moins un poste de manipulation (7) pour déballer des objets (2) fabriqués hors d'un conteneur de construction (5) pouvant être déplacé entre le poste de traitement (4) et le poste de manipulation (7), dans lequel des éléments de liaison de tunnels (30) sont disposés entre les unités formant boîtier (3, 6),
- la prévision d'un tunnel (12) traversant la multitude d'unités formant boîtier (3, 6), en tant que voie de déplacement (13) pour les conteneurs de construction (5) et d'autres conteneurs ou modules et la réalisation du tunnel (12) de telle manière que des conteneurs de construction (5) disposés en position de travail ou dans le cadre d'une opération d'évitement dans les unités formant boîtier (3, 6) ou d'autres conteneurs pouvant être déplacés ne bloquent pas la voie de déplacement (13) à travers le tunnel (12), **caractérisé en ce que**
des conteneurs ou des modules, qui renferment des éléments fonctionnels, peuvent être déplacés dans une zone supérieure dans le tunnel ou la chaîne de tunnels et des conteneurs de construction, des conteneurs de trop-plein et des conteneurs de dosage peuvent être soutenus dans une zone inférieure du tunnel ou de la chaîne de tunnels.

16. Procédé selon la revendication 15, **caractérisé en ce que** la voie de déplacement (13) est réalisée en tant que voie de déplacement ferroviaire.

17. Procédé selon la revendication 15, **caractérisé en ce que** la voie de déplacement (13) est réalisée en tant que voie de déplacement à deux voies.
